# FASCICULE DE BREVET EUROPEEN

(11) **EP 2 517 942 B1**
(45) Date de publication et mention de la délivrance du brevet: **12.10.2016**
(21) Numéro de dépôt: 12165675.5
(22) Date de dépôt: 26.04.2012
(51) Int. Cl.: B61D 33/00, B60N 2/64, B60N 2/66, B60N 2/24, B64D 11/06

(54) **Siège de véhicule muni d'un renfort permettant l'orientation du bassin afin d'améliorer le confort du passager**
Fahrzeugsitz mit einer Verstärkung, die eine Ausrichtung des Beckens zur Steigerung des Sitzkomforts des Passagiers ermöglicht
Vehicle seat provided with a reinforcement that allows pelvis adjustment in order to improve the comfort of the passenger

(30) Priorité: 27.04.2011 FR 1153580
(43) Date de publication de la demande: 31.10.2012
(73) Titulaire: SNCF MOBILITES, 93200 Saint-Denis (FR)
(72) Inventeur: Gallais, Cédric, 27950 Saint Marcel (FR); Jolivet, Sylvain, 95220 Herblay (FR); Perdriel, Philippe, 92170 Vanves (FR); Leborgne, Pol, 75009 Paris (FR)
(74) Mandataire: Gevers & Orès

(56) Documents cités:
- EP-A1- 1 577 158

## Description

L'invention concerne un siège de véhicule, comportant une assise et un dossier, notamment pour trains et en particulier pour trains destinés à transporter des voyageurs pendant un temps de trajet court et avec une forte densité de voyageurs, tels que les trains de banlieue.

Bien que la durée de trajet des trains de banlieue soit plus ou moins courte, la fréquence d'utilisation de ces trains par les mêmes utilisateurs est souvent très élevée, notamment quotidienne. Le confort que procure leur siège n'est donc pas anodin. En particulier, un mauvais positionnement du dos peut engendrer très rapidement de l'inconfort, voir des douleurs dorsales pour l'utilisateur fréquent du train, en particulier des douleurs au niveau du rachis lombaire thoracique ou cervicale ; ou encore augmenter sa fatigue alors même qu'il se déplace dans la plupart des cas vers ou depuis son lieu de travail. Il est donc primordial de ne pas négliger le confort des utilisateurs.

A cette fin, de très nombreuses variantes de sièges dont les dossiers sont munis d'un renfort destiné à venir en contact au niveau des vertèbres lombaires de l'utilisateur du siège ont déjà été proposés. Le document EP 1 577 158 décrit un siège de véhicule comprenant une zone intermédiaire sur laquelle repose la majeure partie du poids d'un passager et une zone périphérique adjacente sur laquelle repose le reste du poids du passager. Ces renforts lombaires sont destinés à réduire l'effort musculaire nécessaire pour maintenir la colonne vertébrale de l'utilisateur afin de garantir le confort de la position assise. Cependant, dans certains cas de figures, et à la vue des variabilités morphologiques, ces renforts lombaires n'agissent pas de façon optimale sur la colonne qui peut se retrouver dans une position non physiologique. De même, des renforts mal positionnés peuvent générer des points durs et appliquer une force sur des segments de la colonne peu flexibles engendrant de la sorte de l'inconfort.

Le positionnement de ces renforts est ainsi fondamental. C'est le cas en particulier dans les trains de banlieue lorsque le siège n'est pas inclinable et/ou lorsque l'inclinaison du dossier par rapport à la verticale doit être réduite le plus possible pour transporter un maximum de passager.

La présente invention a pour but de remédier aux problèmes précités.

Dans cet objectif, il est nécessaire avant d'appliquer un support sur les lombaires que la colonne soit initialement dans une position d'équilibre, nécessitant peu d'effort au maintien de la posture. Ainsi il a été découvert qu'il faut d'abord positionner le renfort non pas en contact avec les lombaires mais dans une zone située plus bas, c'est-à-dire au niveau du bassin de l'utilisateur afin que la colonne soit positionnée principalement grâce à l'orientation du bassin.

L'invention propose à cet effet un siège de véhicule comportant une assise présentant une capacité d'enfoncement e et un dossier muni d'un renfort possédant un sommet S au niveau duquel le dos d'un occupant du siège est amené à venir en contact.

Selon l'invention, qui est définie par les caractéristiques techniques de la revendication indépendante 1, le siège est configuré pour que les valeurs de la profondeur p, en mm, du sommet S et de la somme de la hauteur h, en mm, du sommet S et de l'enfoncement e, en mm, se situent dans une zone, dite zone de confort, ladite zone de confort étant définie dans un plan muni d'un repère orthonormé dont l'unité est le mm, par un hexagone dont le premier sommet A a pour coordonnées (xₐ; yₐ + e) avec 12<xₐ<18 et 185<yₐ+ e<195, le deuxième B (x_{b}; y_{b} + e) avec 17<x_{b}<23 et 185<y_{b} + e<195, le troisième C (x_{c}; y_{c} + e) avec 47<x_{c}<53 et 145<y_{c} + e<155, le quatrième D (x_{d}; y_{d} + e) avec 27<x_{d}<33 et 115<y_{d} + e<125, le cinquième E (xₑ; yₑ + e) avec 12<xₑ<18 et 115<yₑ + e<125 et le sixième F (x_{f}; y_{f} + e) avec 17<x_{f}<23 et 145<y_{f} + e<155, la profondeur p étant représentée en abscisses et mesurée comme étant la distance entre le sommet S et un axe d'inclinaison du dossier, la distance h + e étant représentée en ordonnées, la hauteur h étant mesurée comme étant la distance entre le sommet S et un axe d'inclinaison de l'assise parallèlement à l'axe d'inclinaison du dossier.

Le positionnement du renfort dans cette zone permet ainsi d'avoir un galbe de siège agissant sur le bassin du passager et l'orientant de manière optimale, forçant ainsi la colonne à se positionner dans une posture d'équilibre nécessitant peu d'effort de maintien. Autrement dit, le galbe définit un profil présentant une bosse définissant le renfort au sens de l'invention. Le sommet de la bosse, correspondant au sommet S du renfort, définit, en section, un point saillant permettant d'orienter le bassin du passager de la façon désirée. Le dossier comprenant le renfort présente une courbure continue, y compris au niveau du renfort.

Plus précisément, la position du sommet du renfort en fonction de sa profondeur p et de sa hauteur h est obtenue, pour un siège présentant un contour à vide et fixé au sol, le sol étant considéré comme définissant l'horizontal, à la suite du protocole de mesure décrit selon la procédure qui suit :
- on assied un mannequin 50ème percentile, c'est-à-dire de taille et de poids d'un adulte mâte moyen, selon la norme NF EN ISO 15537, sur le siège de façon à ce que le bas du dos du mannequin soit positionné contre le dossier ;
- on repère le point T correspondant à l'articulation bi coxo-fémorale du mannequin;
- on trace la verticale passant par le point T, qui sectionne la surface de l'assise au niveau d'un point nommé I ;
- on trace ensuite la tangente à l'assise parallèle au sol et on définit le point le plus haut de l'assise, appelé point J, par le point d'intersection de ladite tangente et de l'assise;
- on définit l'axe d'inclinaison de l'assise par rapport à l'horizontale grâce à la droite (IJ);
- on trace la perpendiculaire à la droite (IJ), passant par le point T et on appelle point K, le point d'intersection de cette perpendiculaire avec l'assise;
- à partir du point K, on trace un cercle de 147 mm de rayon;
- on définit le point origine du siège, dit point O, comme étant l'intersection, de ce cercle et de la droite (IJ) située du coté du dossier, c'est-à-dire à l'opposée du nez d'assise;
- on trace ensuite, à partir du point O, un deuxième cercle de 665 mm de rayon ou, si le dossier fait moins de 665 mm de hauteur, un deuxième cercle à partir dudit point O passant par le point le plus haut du dossier;
- on définit comme étant l'axe d'inclinaison du dossier par rapport à la verticale la ligne reliant le point O au point d'intersection du deuxième cercle et du dossier;
- on trace ensuite la tangente au dossier parallèle à l'axe d'inclinaison du dossier, et on définit comme étant le sommet S du renfort le point d'intersection de ladite tangente avec le dossier;
- on mesure la hauteur h et la profondeur p du sommet S dudit renfort par rapport au point O, origine du siège, comme étant, respectivement, la distance entre le sommet S et l'axe d'inclinaison de l'assise parallèlement à l'axe d'inclinaison du dossier et la distance entre le sommet S et l'axe d'inclinaison du dossier;

Ce protocole pourra être mis en oeuvre aussi bien avec une modélisation numérisée du siège dans l'espace, également appelé modèle 3D, qu'avec un siège physique, avec l'aide d'un mannequin normalisé (norme NF EN ISO 15537). Les mesures sont effectuées dans le plan médian sagittal.

Dans le cas de l'utilisation d'un modèle 3D, on pourra utiliser un mannequin lui aussi numérisé pour repérer l'emplacement du point T.

Dans le cas de l'utilisation du siège physique, on pourra utiliser un mannequin physique pour repérer l'emplacement du point T puis numériser le contour du siège et l'emplacement du point T pour effectuer la suite du protocole.

Dans le cas d'un siège présentant une assise déformable, on mesure et/ou on spécifie l'enfoncement du mannequin dans l'assise. Par ailleurs, après avoir positionné le point T, on effectue la suite du protocole par rapport au contour du siège à vide, c'est-à-dire, après avoir retiré le mannequin et avoir laissé le siège reprendre sa forme initiale, dans le cas de l'utilisation d'un mannequin physique, ou en faisant abstraction de la présence du mannequin dans le cas d'une simulation numérique.

Dans ce qui précède, on entend par intersection d'une ligne ou d'une droite avec l'assise et/ou le dossier, l'intersection entre la ligne ou la droite et la surface de ladite assise et/ou ledit dossier, c'est-à-dire l'enveloppe entourant ladite assise et/ou ledit dossier. On entend également par contour à vide le contour du siège lorsqu'il ne subit aucune charge et par surface de l'assise, la face supérieure de l'assise, c'est-à-dire la face de l'assise contre laquelle le mannequin prend appui. On utilise de plus le symbole mm pour désigner l'unité du millimètre.

Dans le protocole précédent, on n'impose pas d'enfoncement sur le dossier. Comme indiqué plus haut, on prendra par contre en considération un éventuel enfoncement de l'assise sous le poids du mannequin; ou dans le cas du modèle 3D, un enfoncement spécifié.

L'enfoncement sur l'assise pourra, par exemple, être mesuré en appliquant une force de 50 Newton avec un disque de 20 mm de diamètre au niveau du point K. On mesure l'enfoncement e comme étant la distance entre la position du point K lorsque le siège est à vide et la position du point K lorsque l'on applique la force de 50 Newton avec le disque de 20 mm de diamètre au niveau du point K. Le disque est en particulier positionné de façon centrée sur le point K.

En outre, si le dossier fait moins de 665 mm de hauteur, on trace un deuxième cercle à partir du point origine du siège, passant cette fois par le point le plus haut du dossier et on définit de la même manière que décrit précédemment l'axe d'inclinaison du dossier.

On peut aussi mesurer l'angle entre l'horizontale et la ligne passant par le point I et le point J définis précédemment. Cet angle correspond à l'angle d'inclinaison de l'assise.

Les revendications dépendantes définissent des caractéristiques additionnelle de l'invention.

Selon une caractéristique additionnelle de l'invention, l'enfoncement est inférieur ou égal à 30 mm. Bien sûr, l'invention porte également sur un siège sans enfoncement.

Selon une caractéristique additionnelle de l'invention, le premier sommet A de l'hexagone a pour coordonnées (15; 190), le deuxième B (20; 190), le troisième C (50; 150), le quatrième D (30; 120), le cinquième E (15; 120) et le sixième F (20; 150). On prend ainsi en compte l'enfoncement.

Selon une caractéristique additionnelle de l'invention et grâce à la position du renfort et l'optimisation du galbe du siège qui en découle, le confort postural du passager peut être maintenu même sur un angle de dossier inférieur ou égale à 15°. Cet angle permet notamment de positionner des sièges l'un derrière l'autre et/ou l'un en face de l'autre avec un encombrement restreint.

Selon une caractéristique additionnelle de l'invention, l'assise fait un angle avec l'horizontale inférieur ou égale à 10°.

Selon une caractéristique additionnelle de l'invention, le dossier et l'assise ont une largeur d'au moins 430 mm.

Selon une caractéristique additionnelle de l'invention, le renfort est centré sur le dossier, notamment avec une largeur d'au moins 150 mm.

Selon une caractéristique additionnelle de l'invention, la profondeur p du renfort diminue lorsque l'on se rapproche des bords du dossier.

Selon une caractéristique additionnelle de l'invention, le dossier présente une zone d'appui pour les épaules. Afin de garantir le fait que cette zone convienne au plus grand nombre d'utilisateur du siège, le dossier présente par exemple une hauteur d'au moins 665 mm.

Selon une caractéristique additionnelle de l'invention, ledit dossier est ajustable et notamment son angle d'inclinaison, tout en restant dans une plage inférieure à 15°.

Selon une caractéristique additionnelle de l'invention, le dossier est fixe.

Les figures annexées feront bien comprendre comment l'invention peut être réalisée. Sur ces figures, des références identiques désignent des éléments semblables.
La figure 1 est une vue schématique d'un siège pour véhicule, conforme à l'invention, et du squelette d'un utilisateur du siège dans un plan perpendiculaire à la largeur du siège (plan sagittal).
Les figures 2 à 7 représentent aussi un siège pour véhicule, conforme à l'invention, selon un plan de coupe perpendiculaire à la largeur du siège, ici, le plan médian sagittal. Sur les figures 2 à 4, un mannequin 50ème percentile est également représenté en position assise sur ledit siège.
La figure 8 illustre un graphique représentant la zone de confort sur un repère orthogonal donnant en abscisse la profondeur p, en mm, du sommet S et, en ordonnée la somme de la hauteur h, en mm, du sommet S, et de l'enfoncement e en mm, pour un siège conforme à l'invention.

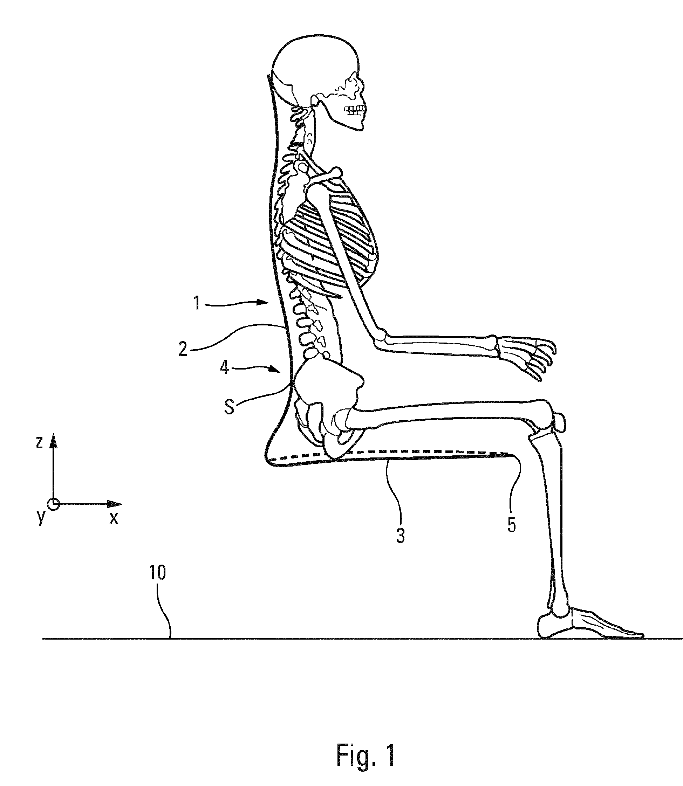

L'invention se rapporte à un siège de véhicule, notamment de train, tel que représenté sur la figure 1.

Par convention et pour simplifier la description du siège 1, on forme un repère cartésien (x, y, z). Les deux axes x et y sont parallèle au sol 10 formant ainsi un plan parallèle au sol, supposé être horizontale dans la suite, et l'axe z est perpendiculaire à celui-ci, c'est-à-dire qu'il suit une direction verticale par rapport au sol 10.

La figure 1 représente un siège 1 muni d'un dossier 2 et d'une assise 3 comprenant un nez d'assise 5 située à son extrémité libre. L'assise est choisie comme présentant une capacité d'enfoncement inférieur à 30 mm. Ledit siège 1 peut être muni, notamment, d'accoudoirs, de poignées et/ou de tout autre moyen permettant aux passagers voyageant debout de se tenir. En outre, il peut, par exemple, être un siège dit strapontin, c'est-à-dire que l'assise 3 est notamment rabattable sur le dossier 2, permettant ainsi de gagner de l'espace en cas de forte affluence.

Ledit dossier 2 comprend un renfort 4 sur lequel le dos du passager est amené à venir préférentiellement en contact, en particulier la partie basse du dos. Ledit renfort 4 peut également être appelé support sacré en référence à la zone du dos du passager avec laquelle il est en contact. Il est de manière préférentielle assez rigide, favorisant ainsi son rôle de guidage de la colonne vertébrale vers une position plus confortable pour le passager.

Ce renfort 4 possède un sommet S au niveau duquel le dos d'un utilisateur du siège 1 va venir préférentiellement en contact. Par sommet S du renfort 4, on entend définir le point du renfort le plus éloigné de l'axe d'inclinaison du dossier.

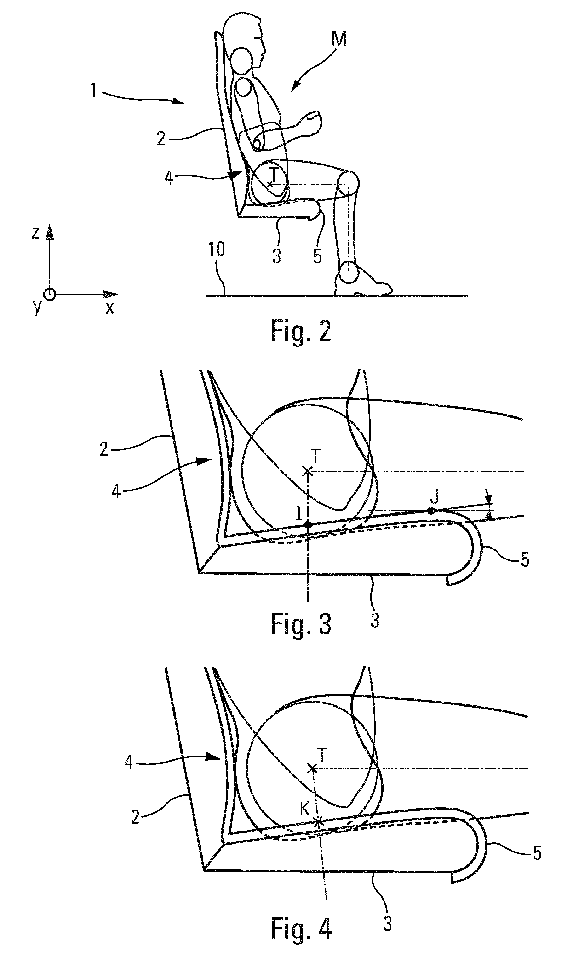

On définit le positionnement du renfort 4 par la position de son sommet S dans un référentiel précis que nous allons maintenant détailler à l'aide des figures 2 à 7.

Le protocole de mesure commence par le placement d'un mannequin M sur le siège 1 de véhicule. En référence à la figure 2, on place un mannequin 50^{ème} percentile, c'est-à-dire de taille et de poids d'un adulte mâle moyen, dans le siège 1. Le choix de ce mannequin et des autres cités par la suite, respecte la norme NF EN ISO 15537 relative aux principes de choix et d'utilisation de sujets d'essai pour l'essai des aspects anthropométriques des produits industriels et leur conception. Ledit mannequin M est positionné sur le siège de sorte que le bas de son dos soit en contact avec le dossier 2 du siège, ses pieds reposant de préférence sur le sol 10, afin d'optimiser le contact du mannequin M avec l'assise 3. Lorsque le mannequin est correctement placé, on repère le point T correspondant à l'articulation coxo-fémorale au niveau du plan médian sagittal.

Dans le cas d'un siège physique, on retire alors le mannequin et on laisse le siège reprendre son contour à vide. On trace la verticale (parallèle à l'axe z) passant par le point T, qui sectionne le contour de l'assise 3 au niveau d'un point nommé I, ainsi que la tangente à l'assise parallèle au sol, c'est-à-dire ici, l'horizontale. L'intersection de ladite tangente à l'assise et du contour de l'assise définit le point le plus haut de l'assise, appelé point J.

Comme illustré sur la figure 3, on définit comme étant l'axe d'inclinaison de l'assise par rapport à l'horizontale, la droite (IJ) passant par les points I et J définis précédemment. On peut ainsi mesurer l'angle d'inclinaison de l'assise entre l'horizontale (parallèle à l'axe x) et la droite (IJ). Dans l'exemple illustré, cet angle est égal à 6,5 degrés.

On trace ensuite, comme représenté sur la figure 4, la perpendiculaire à l'axe d'inclinaison de l'assise passant par l'articulation coxo-fémorale, c'est-à-dire passant par le point T. On appelle point K, l'intersection de cette perpendiculaire avec l'axe d'inclinaison de l'assise, c'est-à-dire l'intersection de cette perpendiculaire avec la droite (IJ). C'est au niveau du point K que l'on mesure l'enfoncement e de l'assise 3. La mesure de l'enfoncement e suit un protocole de mesure. Ce protocole prévoit que l'enfoncement e peut être mesuré en appliquant une force de 50 Newton avec un disque de 20 mm de diamètre au niveau du point K. L'enfoncement e correspond à la distance entre la position du point K lorsque le siège est à vide et la position du point K lorsque l'on applique au siège le protocole de mesure de l'enfoncement.

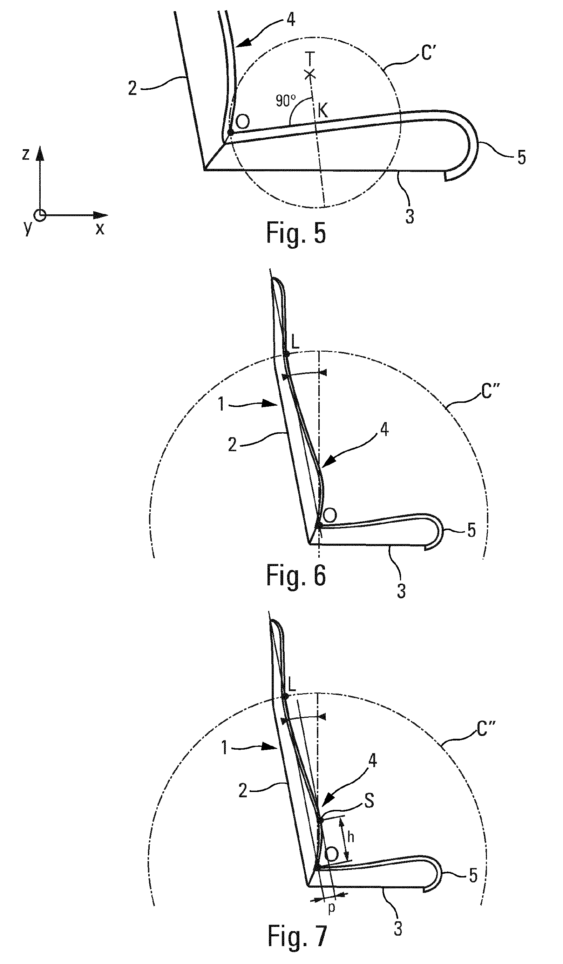

A partir du point K, on trace un cercle C' de 147 mm de rayon qui correspond à la distance entre le point T et les fesses du mannequin M. Le point O, origine du siège, est obtenu comme illustré par la figure 5, avec l'intersection du cercle C' et de la droite (IJ) (on parle ici de l'intersection située du coté du dossier, c'est-à-dire à l'opposée du nez d'assise 5).

On trace ensuite un cercle C" de 665 mm, comme représenté sur la figure 6, correspondant à la hauteur d'épaule d'un mannequin 95ème percentile en position assise, à partir de l'origine O du siège. La ligne reliant l'origine du siège O au point d'intersection L du cercle C" et du dossier 2 donne l'axe d'inclinaison du dossier par rapport à la verticale, c'est-à-dire par rapport à l'axe z. On peut ainsi mesurer l'angle d'inclinaison du dossier entre la verticale et la droite (OL) et dans l'exemple représenté, cet angle est égal à 11 degrés. Si le dossier fait moins de 665 mm de hauteur, on trace un cercle, à partir de l'origine O du siège 1 passant par le point le plus haut du dossier et on définit de la même manière l'axe d'inclinaison du dossier 2.

En référence à la figure 7, on trace la tangente au dossier 2 parallèle à l'axe d'inclinaison du dossier. Le point d'intersection défini par ladite tangente avec le contour du dossier 2 définit l'emplacement du renfort 4 et est appelé sommet S du renfort 4. On mesure sa hauteur h et sa profondeur p par rapport à l'origine du siège O comme étant, respectivement, la distance entre le sommet S et l'axe d'inclinaison de l'assise parallèlement à l'axe d'inclinaison du dossier et la distance entre le sommet S et l'axe d'inclinaison du dossier. En particulier, et dans l'exemple représenté sur la figure 7, la hauteur du sommet S est de 157 mm et sa profondeur est de 38 mm.

Il faut noter que tous les points du protocole décrit précédemment se situent dans le plan médian sagittal, c'est-à-dire dans un plan perpendiculaire au siège 1 et au milieu de celui-ci selon l'axe y, et que par conséquent, le sommet S se situe également dans le plan médian sagittal et c'est donc dans ce plan que sont données les valeur de sa hauteur h, de sa profondeur p et de l'enfoncement e.

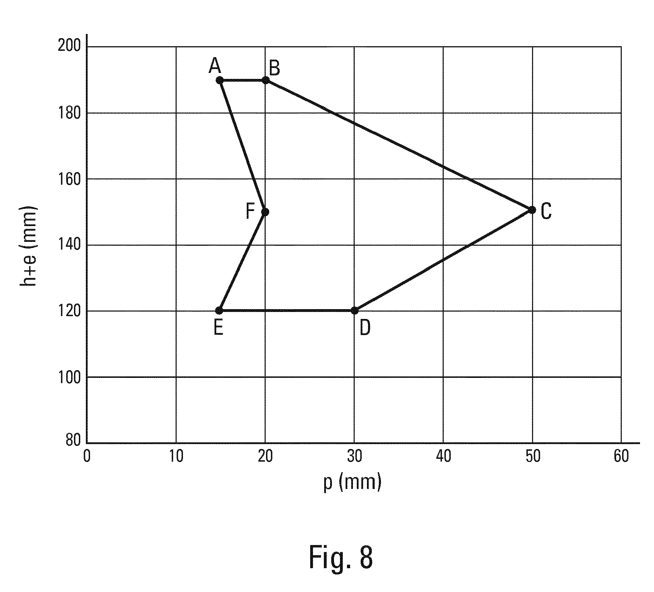

La figure 8 illustre un graphique représentant la zone de confort sur un repère orthogonal donnant en abscisse la profondeur p, en mm, du sommet S et, en ordonnée la somme de la hauteur h, en mm, du sommet S, mesurées comme expliqué précédemment et de l'enfoncement e en mm.

Selon l'invention, le siège 1 est configuré pour que les valeurs de la profondeur p en mm et de la somme de l'enfoncement e en mm et de la hauteur h en mm du sommet S, se situent dans une zone, dite zone de confort. Ladite zone de confort est définie dans un plan muni d'un repère orthonormé dont l'unité est le mm, par un hexagone dont le premier sommet A a pour coordonnées (xₐ; yₐ + e) avec 12<xₐ<18 et 185<yₐ+ e<195, le deuxième B (x_{b}; y_{b}+ e) avec 17<x_{b}<23 et 185<y_{b} + e<195, le troisième C (x_{c}; y_{c} + e) avec 47<x_{c}<53 et 145<y_{c}+ e<155, le quatrième D (x_{d}; y_{d} + e) avec 27<x_{d}<33 et 115<y_{d} + e<125, le cinquième E (xₑ; yₑ + e) avec 12<xₑ<18 et 115<yₑ+ e<125 et le sixième F (x_{f}; y_{f} + e) avec 17<x_{f}<23 et 145<y_{f} + e<155, la profondeur p étant représentée en abscisses et mesurée comme étant la distance entre le sommet S et l'axe d'inclinaison du dossier, c'est-à-dire la projection du point S sur l'axe d'inclinaison du dossier, la distance h + e étant représentée en ordonnées, la hauteur h étant mesurée comme étant la distance entre le sommet S et l'axe d'inclinaison de l'assise parallèlement à l'axe d'inclinaison du dossier.

Autrement dit, pour un renfort présentant un sommet de faible profondeur, par exemple une profondeur de l'ordre de 20 mm, la somme de la hauteur h du sommet S et de l'enfoncement e sera de l'ordre de 120 à 190 mm. Pour des renforts présentant un sommet de forte profondeur, par exemple de l'ordre de 40 mm, la somme de la hauteur h du sommet S et de l'enfoncement e sera de l'ordre de 135 à 163 mm. Pour des renforts présentant un sommet de profondeur intermédiaire, par exemple de l'ordre de 30 mm, la somme de la hauteur h du sommet S et de l'enfoncement e sera de l'ordre de 120 à 176 mm.

Lorsque le passager est assis, la partie basse de son dos est en contact sur le dossier 2 en premier au niveau du sommet S du renfort 4. Grâce à la localisation choisie, le sommet S va ainsi orienter de manière automatique le bassin du passager et donc sa colonne dans une position optimale améliorant son confort et diminuant sa fatigue pour une population la plus large possible. Le renfort 4 positionné ainsi, permet en outre, d'obtenir ce confort même avec une faible inclinaison du dossier 2, par exemple inférieur ou égale à 15°, et donc de garantir l'optimisation de l'encombrement du siège 1 dans le véhicule.

Selon une caractéristique de l'invention, le premier sommet A de l'hexagone représenté sur la figure 8 a pour coordonnées (15; 190), le deuxième B (20; 190), le troisième C (50; 150), le quatrième D (30; 120), le cinquième E (15; 120) et le sixième F (20; 150). On entend par là que xₐ = 15 et yₐ + e = 190 ; x_{b} = 20 et y_{b} + e = 190; x_{c}=50 et y_{c} + e = 150, xd = 30 et y_{d} + e = 120; xₑ = 15 et yₑ + e= 120; x_{f} = 20 et y_{f} + e = 150.

La hauteur du sommet S, enfoncement compris, (autrement dit la somme h + e) sera inférieure, en particulier, à 170 mm, notamment 150 mm.

Selon une caractéristique additionnelle de l'invention, l'assise 3 fait un angle avec l'horizontale inférieur ou égale à 10°.

Afin d'assurer le confort pour des passagers de différentes morphologies, le dossier 2 et l'assise 3 possèdent une largeur par exemple d'au moins 430 mm. En outre, dans le but d'appliquer une force centrée sur le bassin, lui permettant ainsi de positionner la colonne de façon optimale, le renfort 4 est centré sur le dossier 3, notamment avec une largeur d'au moins 150 mm. Selon un autre aspect de l'invention, la profondeur p du renfort 4 diminue lorsque l'on se rapproche des bords du dossier 2.

Selon une caractéristique additionnelle de l'invention, ledit dossier 2 est ajustable et notamment son angle d'inclinaison. Selon une variante de l'invention, le dossier 2 est fixe, c'est-à-dire qu'il reste immobile par rapport à l'assise 3 une fois assemblé à celle-ci.

Le dossier 2 peut en outre présenter une zone d'appui pour les épaules située dans le prolongement du renfort 4, au dessus de celui-ci, notamment en forme de cambrure. Pour convenir au plus grand nombre de morphologies différentes, le dossier peut notamment présenter une hauteur d'au moins 665 mm qui correspond à la hauteur des épaules du 95ème percentile homme en position assise.

La zone d'appui pour les épaules définie précédemment peut également se prolonger par une zone d'appui tête améliorant d'avantage le confort du passager. Le dossier 2 comprend alors, de bas en haut, d'un renfort sacrée 4, d'une zone d'appui des épaules et d'une zone d'appui-tête, positionné les uns par rapport aux autres pour améliorer l'ergonomie du siège 1. Les lignes définissant le galbe du siège dans le sens de la hauteur suivent ainsi une courbe sensiblement en forme de « S » allongé. Les zones au dessus du renfort sacré ne doivent pas modifier la position d'équilibre de la colonne générée par le renfort.

Bien que le renfort 4 doit placer le bassin du passager dans une position améliorant la posture du passager, et que l'essentiel du poids du passager est exercé sur l'assise (surtout pour des inclinaison de dossier faibles), le dossier peut être plus ou moins souples afin d'éviter tout point dur et garantir un meilleur confort au passager.

Ledit dossier 2 et ladite assise 3 peuvent être composés d'une structure rigide porteuse sur laquelle il peut être monté des blocs de mousse, notamment de mousse polyuréthane, recouvert d'un tissu, par exemple un tissu velours à poils long associé à des fibres d'aramides (pour les propriétés d'anti-lacération).

Selon une variante, la structure rigide porteuse peut être recouverte directement d'un tissu sans mousse, par exemple un tissu velours, associé à une nappe anti-lacération souvent composé de matière plastique et de fils métalliques.

## Revendications

1. Siège (1) de véhicule comportant une assise (3) présentant une capacité d'enfoncement e et un dossier (2) muni d'un renfort (4) possédant un sommet (S) au niveau duquel le dos d'un occupant du siège est amené à venir en contact, **caractérisé par le fait que** le siège (1) est configuré pour que les valeurs de la profondeur p, en mm, du sommet (S) et de la somme de la hauteur h, en mm, du sommet (S) et de l'enfoncement e, en mm, se situent dans une zone, dite zone de confort, ladite zone de confort étant définie dans un plan muni d'un repère orthonormé dont l'unité est le mm, par un hexagone dont le premier sommet A a pour coordonnées (xₐ; yₐ + e) avec 12<xₐ<18 et 185<yₐ + e<195, le deuxième B (x_{b}; y_{b} + e) avec 17<x_{b}<23 et 185<y_{b} + e<195, le troisième C (x_{c}; y_{c} + e) avec 47<x_{c}<53 et 145<y_{c} + e<155, le quatrième D (x_{d}; y_{d} + e) avec 27<x_{d}<33 et 115<y_{d} + e<125, le cinquième E (xₑ; yₑ + e) avec 12<xₑ<18 et 115<yₑ + e<125 et le sixième F (x_{f}; y_{f} + e) avec 17<x_{f}<23 et 145<y_{f} + e<155, la profondeur p étant représentée en abscisses, la distance h + e étant représentée en ordonnées, l'enfoncement e, la profondeur p et la hauteur h sont obtenus, pour le siège (1) fixé au sol (10), le sol (10) étant considéré comme définissant l'horizontal, à la suite du protocole de mesure suivant :
- on assied un mannequin (M) 50ème percentile selon la norme NF EN ISO 15537 sur le siège (1) de façon à ce que le bas du dos du mannequin (M) soit positionné contre le dossier (2) ;
- on repère un point (T) correspondant à l'articulation bi coxo-fémorale du mannequin (M) ;
- on trace la verticale passant par le point (T), qui sectionne la surface de l'assise (3) au niveau d'un point nommé (I);
- on trace ensuite la tangente à l'assise (3) parallèle au sol (10) et on définit le point le plus haut de l'assise (3), appelé point (J), par le point d'intersection de ladite tangente et de l'assise (3) ;
- on définit l'axe d'inclinaison de l'assise (3) par rapport à l'horizontale grâce à la droite (IJ);
- on trace la perpendiculaire à la droite (IJ), passant par le point (T) et on appelle point (K), le point d'intersection de cette perpendiculaire avec l'assise (3);
- à partir du point (K), on trace un cercle (C') de 147 mm de rayon;
- on définit le point origine du siège, dit point O, comme étant l'intersection, de ce cercle (C') et de la droite (IJ) située du coté du dossier (2);
- on trace ensuite, à partir du point O, un deuxième cercle (C") de 665 mm de rayon ou, si le dossier (2) fait moins de 665 mm de hauteur, un deuxième cercle (C") passant par le point le plus haut du dossier (2)
- on définit comme étant l'axe d'inclinaison du dossier (2) par rapport à la verticale la ligne reliant le point O au point d'intersection (L) du deuxième cercle (C") et du dossier (2) ;
- on trace ensuite la tangente au dossier (2) parallèle à l'axe d'inclinaison du dossier (2), et on définit comme étant le sommet (S) du renfort (4) le point d'intersection de ladite tangente avec le dossier (2) ;
- on mesure la hauteur h et la profondeur p du sommet (S) dudit renfort par rapport au point O, origine du siège (1), comme étant, respectivement, la distance entre le sommet (S) et l'axe d'inclinaison de l'assise (3) parallèlement à l'axe d'inclinaison du dossier (2) et la distance entre le sommet (S) et l'axe d'inclinaison du dossier (2) ;
- on mesure l'enfoncement e sur l'assise (3) en appliquant une force de 50 Newton avec un disque de 20 mm de diamètre au niveau du point (K).

2. Siège (1) selon la revendication 1, dans lequel l'enfoncement est nul ou inférieur ou égal à 30 mm.

3. Siège (1) selon l'une quelconque des revendications précédentes, dans lequel le premier sommet A de l'hexagone a pour coordonnées (15; 190), le deuxième B (20; 190), le troisième C (50; 150), le quatrième D (30; 120), le cinquième E (15; 120) et le sixième F (20; 150).

4. Siège (1) selon l'une quelconque des revendications précédentes dans lequel ledit dossier (2) fait un angle avec la verticale, dit angle d'inclinaison, inférieur ou égal à 15°.

5. Siège (1) selon la revendication 4, dans lequel l'angle d'inclinaison du dossier (2) est ajustable.

6. Siège (1) selon l'une quelconque des revendications 1 à 4, dans lequel le dossier (2) est fixe.

7. Siège (1) selon l'une quelconques des revendications précédentes, dans lequel l'assise (3) fait un angle avec l'horizontale inférieur ou égale à 10°.

8. Siège (1) selon l'une quelconque des revendications précédentes dans lequel le dossier (2) et l'assise (3) ont une largeur d'au moins 430 mm.

9. Siège (1) selon la revendication 8 dans lequel le renfort (4) est centré sur le dossier (2).

10. Siège (1) selon la revendication 9 dans lequel le renfort (4) est centré avec une largeur d'au moins 150 mm.

11. Siège (1) selon l'une quelconque des revendications précédentes dans lequel la profondeur du renfort (4) diminue lorsque l'on se rapproche des bords du dossier (2).

12. Siège (1) selon l'une quelconque des revendications précédentes, dans lequel le dossier (2) présente une zone d'appui pour les épaules.

13. Siège (1) selon l'une quelconque des revendications précédentes, dans lequel le dossier (2) à une hauteur d'au moins 665 mm.

## Patentansprüche

1. Sitz (1) für ein Fahrzeug, der eine Sitzfläche (3), die eine Fähigkeit für eine Eindrückung e aufweist, und eine Rückenlehne (2) umfasst, die mit einer Verstärkung (4) versehen ist, die einen Eckpunkt (S) besitzt, bei dem der Rücken eines Sitzinsassen veranlasst wird, in Kontakt zu kommen, **dadurch gekennzeichnet, dass** der Sitz (1) so konfiguriert ist, dass die Werte der Tiefe p, in mm, des Eckpunkts (S) und der Summe der Höhe h, in mm, des Eckpunkts (S) und der Eindrückung e, in mm, sich in einer Zone befinden, die Komfortzone genannt wird, wobei die Komfortzone in einer Ebene, die mit einem orthonormalen Koordinatensystem versehen ist, deren Einheit mm ist, durch ein Sechseck definiert ist, in dem der erste Eckpunkt A die Koordinaten (xₐ; yₐ + e) mit 12 < xₐ <18 und 185 < yₐ + e < 195, der zweite B (x_{b}; y_{b} + e) mit 17 < x_{b} < 23 und 185 < y_{b} + e < 195, der dritte C (x_{c}; y_{c} + e) mit 47 < x_{c} < 53 und 145 < y_{c} + e < 155, der vierte D (x_{d}, y_{d} + e) mit 27 < x_{d} < 33 und 115 < y_{d} + e < 125, der fünfte E (xₑ, yₑ + e) mit 12 < xₑ < 18 und 115 < yₑ + e < 125 und der sechste F (x_{f}, y_{f} + e) mit 17 < x_{f} < 23 und 145 < y_{f} + e < 155 hat, wobei die Tiefe p auf den Abszissen dargestellt ist, wobei der Abstand h + e auf den Ordinaten dargestellt ist, wobei die Eindrückung e, die Tiefe d und die Höhe h für den Sitz (1), der auf dem Boden (10) befestigt ist, wobei der Boden (10) so angesehen wird, als ob er die Horizontale definiert, als Ergebnis des folgenden Messprotokolls erhaltenen werden:
- ein Dummy (M), 50. Perzentil gemäß der Norm NF EN ISO 15537, wird so auf den Sitz (1) gesetzt, so dass der untere Rücken des Dummys (M) gegen die Rückenlehne (2) positioniert ist;
- ein Punkt (T) wird ausfindig gemacht, der den beiden Hüftgelenken des Dummys (M) entspricht;
- die Vertikale wird gezogen, die durch den Punkt (T) verläuft und die Oberfläche der Sitzfläche (3) bei einem Punkt schneidet, der (I) genannt wird;
- dann wird die Tangente an dem Sitz (3) parallel zum Boden (10) gezogen, und der höchste Punkte der Sitzfläche (3), der Punkt (J) genannt wird, wird durch den Schnittpunkt der Tangente und der Sitzfläche (3) definiert;
- die Neigungsachse der Sitzfläche (3) bezüglich der Horizontalen wird durch die Gerade (IJ) definiert;
- die Senkrechte zu der Linie (IJ), die durch den Punkt (T) verläuft, wird gezogen, und Punkt (K) wird der Schnittpunkt dieser Senkrechten mit der Sitzfläche (3) genannt;
- ausgehend vom Punkt (K) wird ein Kreis (C') mit einem Radius von 147 mm gezogen;
- der Ursprungspunkt des Sitzes, der O genannt wird, wird als der Schnittpunkt des Kreises (C') und der Geraden (IJ), die sich auf der Seite der Rückenlehne (2) befindet, definiert;
- dann wird ausgehend von dem Punkt (O) ein zweiter Kreis (C") mit einem Radius von 665 mm, oder, wenn die Rückenlehne (2) eine Höhe von weniger als 665 mm hat, ein zweiter Kreis (C") gezogen, der durch den höchsten Punkt der Rückenlehne (2) verläuft;
- als die Neigungsachse der Rückenlehne (2) in Bezug auf die Vertikale wird die Linie, die den Punkt O mit dem Schnittpunkt (L) des zweiten Kreises (C") und der Rückenlehne (2) verbindet, definiert;
- dann wird die Tangente an der Rückenlehne (2) parallel zu der Neigungsachse der Rückenlehne (2) gezogen, und als der Eckpunkt (S) der Verstärkung (4) wird der Schnittpunkt der Tangente mit der Rückenlehne (2) definiert;
- die Höhe h und die Tiefe p des Eckpunkts (S) der Verstärkung werden mit Bezug auf den Punkt (O), den Ursprungspunkt des Sitzes (1), als der Abstand zwischen dem Eckpunkt (S) und der Neigungsachse der Sitzfläche (3) parallel zu der Neigungsachse der Rückenlehne (2) bzw. als der Abstand zwischen dem Eckpunkt (S) und er Neigungsachse der Rückenlehne (2) gemessen;
- die Eindrückung e auf der Sitzfläche (3) wird durch Anwendung einer Kraft von 50 Newton mit einer Scheibe mit einem Durchmesser von 20 mm bei dem Punkt (K) gemessen.

2. Sitz (1) nach Anspruch 1, wobei die Eindrückung null oder kleiner oder gleich 30 mm ist.

3. Sitz (1) nach einem der vorhergehenden Ansprüche, wobei der erste Eckpunkt A des Sechsecks die Koordinaten (15; 190), der zweite B (20; 190), der dritte C (50; 150), der vierte D (30; 120), der fünfte E (15; 120) und der sechste F (20; 150) hat.

4. Sitz (1) nach einem der vorhergehenden Ansprüche, wobei die Rückenlehne (2) einen Winkel mit der Vertikalen hat, der Neigungswinkel genannt wird und kleiner oder gleich 15° ist.

5. Sitz (1) nach Anspruch 4, wobei der Neigungswinkel der Rückenlehne (2) einstellbar ist.

6. Sitz (1) nach einem der Ansprüche 1 bis 4, wobei die Rückenlehne (2) feststehend ist.

7. Sitz (1) nach einem der vorhergehenden Ansprüche, wobei die Sitzfläche (3) einen Winkel mit der Horizontalen hat, der kleiner oder gleich 10° ist.

8. Sitz (1) nach einem der vorhergehenden Ansprüche, wobei die Rückenlehne (2) und der Sitz (3) eine Breite von mindestens 430 mm haben.

9. Sitz (1) nach Anspruch 8, wobei die Verstärkung (4) an der Rückenlehne (2) zentriert ist.

10. Sitz (1) nach Anspruch 9, wobei die Verstärkung (4) mit einer Breite von mindestens 150 mm zentriert ist.

11. Sitz (1) nach einem der vorhergehenden Ansprüche, wobei die Tiefe der Verstärkung (4) abnimmt, wenn sie sich den Rändern der Rückenlehne (2) annähert.

12. Sitz (1) nach einem der vorhergehenden Ansprüche, wobei die Rückenlehne (2) eine Auflagezone für die Schultern aufweist.

13. Sitz (1) nach einem der vorhergehenden Ansprüche, wobei die Rückenlehne (2) eine Höhe von mindestens 665 mm hat.

## Claims

1. Vehicle seat (1) comprising a seat base (3) having a capacity of depression e and back support (2) equipped with a reinforcement (4) having a top end (S) at the level of which the back of a seat occupant come into contact with, **characterized by** the fact that the seat (1) is configured so that the values of the depth p, in mm, of the top end (S) and the sum of the height h, in mm, of the top end (S) and of the depression e, in mm, are located in a zone, called comfort zone, said comfort zone being defined in a plane equipped with an orthonormal reference system whose unit is the mm, by a hexagon whose first top end A has the coordinates (xₐ; Yₐ + e) with 12<xₐ<18 and 185<yₐ + e<195, the second B (x_{b}; y_{b} + e) with 17<x_{b}<23 and 185<y_{b} + e<195, the third C (x_{c}; Y_{c} + e) with 47<x_{c}<53 and 145<y_{c} + e<155, the forth D (x_{d}; Y_{d} + e) with 27<x_{d}<33 and 115<y_{d} + e<125, the fifth E (xₑ; Yₑ + e) with 12<xₑ<18 and 115<yₑ + e<125 and the sixth F (x_{f}; Y_{f} + e) with 17<x_{f}<23 and 145<y_{f}+e<155, the depth p being represented in abscissa, the distance h + e being represented in ordinates, the depression e, the depth p and the height h are obtained, for the seat (1) fixed to the floor (10), the floor (10) being considered as defining the horizontal, according to the following measurement protocol:
- seated is a dummy (M) 50th percentile according to the standard NF EN ISO 15537 on the seat (1) so that the bottom of the back of the dummy (M) is positioned against the back support (2);
- a point (T) is identified corresponding to the hip joint of the dummy (M);
- the vertical passing through the point (T) is traced, which sections the surface of the seat base (3) at the level of a point called (I);
- then the tangent to the seat base (3) is traced parallel to the floor (10) and the highest point of the seat base (3) is defined, called point (J), by the point of intersection of said tangent and the seat base (3);
- the tilt axis of the seat base (3) is defined in relation to the horizontal by means of the line (IJ);
- the perpendicular to the line (IJ) is traced, passing through the point (T) and called point (K) is the point of intersection of this perpendicular with the seat base (3);
- from point (K), a circle (C') is traced with 147mm radius;
- the point of origin of the seat is defined, called point 0, as being the intersection, of this circle (C') and the line (IJ) located on the side of the back support (2);
- then, traced from point 0, is a second circle (C") with 665mm radius or, if the back support (2) is less than 665mm high, a second circle (C") passing through the highest point of the back support (2)
- defined as being the tilt axis of the back support (2) in relation to the vertical is the line linking the point O with the point of intersection (L) of the second circle (C") and of the back support (2);
- then traced is the tangent to the back support (2) parallel to the tilt axis of the back support (2), and defined as being the top end (S) of the reinforcement (4) is the point of intersection of said tangent with the back support (2);
- the height h and the depth p of the top end (S) of said reinforcement is measured in relation to the point 0, origin of the seat (1), as being, respectively, the distance between the top end (S) and the tilt axis of the seat base (3) parallel to the tilt axis of the back support (2) and the distance between the top end (S) and the tilt axis of the back support (2);
- the depression e on the seat base (3) is measured by applying a force of 50 newton with a disc of 20mm diameter at the level of the point (K).

2. Seat (1) according to the Claim 1, in which the depression is zero or less than or equal to 30mm.

3. Seat (1) according to any one of the previous claims, in which the first top end A of the hexagon has the coordinates (15; 190), the second B (20; 190), the third C (50; 150), the forth D (30; 120), the fifth E (15; 120) and the sixth F (20; 150).

4. Seat (1) according to any one of the previous claims in which said back support (2) makes an angle with the vertical, called tilt angle, less than or equal to 15°.

5. Seat (1) according to the Claim 4, in which the tilt angle of the back support (2) is adjustable.

6. Seat (1) according to any one of the Claims 1 to 4, in which the back support (2) is fixed.

7. Seat (1) according to any one of the previous claims, in which the seat base (3) makes an angle with the horizontal less than or equal to 10°.

8. Seat (1) according to any one of the previous claims in which the back support (2) and the seat base (3) have a width of at least 430mm.

9. Seat (1) according the Claim 8 in which the reinforcement (4) is centred on the back support (2).

10. Seat (1) according the Claim 9 in which the reinforcement (4) is centred with a width of at least 150mm.

11. Seat (1) according to any one of the previous claims in which the depth of the reinforcement (4) decreases on its approach to the edges of the back support (2).

12. Seat (1) according to any one of the previous claims, in which the back support (2) has a support zone for the shoulders.

13. Seat (1) according to any of the previous claims, in which the back support (2) has a height of at least 665mm.
